# EUROPÄISCHE PATENTANMELDUNG

(11) **EP 1 168 532 A1**
(43) Veröffentlichungstag der Anmeldung: **02.01.2002**
(21) Anmeldenummer: 00810551.2
(22) Anmeldetag: 23.06.2000
(51) Int. Cl.: H01S 3/08, H01S 3/00, G02F 1/35

(54) **Verfahren zur Kompensation thermisch optischer Effekte**

(71) Anmelder: Universität Bern, 3012 Bern (CH)
(72) Erfinder: Weber, Heinz, 3122 Kehrsatz (CH); Graf, Thomas, 3322 Urtenen (CH)
(74) Vertreter: Roshardt, Werner Alfred, Dipl.-Phys.

(57) **Zusammenfassung**

Das Verfahren zur Kompensation thermisch optischer Effekte im Strahlengang einer optischen Komponenten enthaltenden Anordnung (z.B. eines Laserresonators) verwendet zur optischen Kompensation im Strahlengang wenigstens zwei unterschiedliche Materialeigenschaften aufweisende optische Elemente **(30a-30d,41a-41c)** im Zusammenspiel. Zur Kompensation wird eine Erwärmung mittels Strahlungsabsorption, eine radiale Wärmeleitung zur Erzeugung einer leistungsabhängigen Temperaturverteilung und/oder eine thermische Dispersion zur Erzeugung einer thermischen Linse auf die unterschiedlichen Elemente verteilt.

## Beschreibung

### Technisches Gebiet

Die Erfindung betrifft ein Verfahren zur Kompensation optisch thermischer Effekte gemäß dem Oberbegriff des Patentanspruchs 1, eine optische Einheit hierzu gemäß dem Oberbegriff des Patentanspruchs 4 sowie eine optische Anordnung gemäß dem Oberbegriff des Patentanspruchs 10.

### Stand der Technik

Werden optische Elemente erwärmt, so ändern sich in der Regel deren optische Eigenschaften (Brechungsindex, äussere Kontur), was Veränderungen der Phasenfront eines in solchen Elementen geführten Strahles zur Folge hat (thermische Linse, thermische Doppelbrechung). Thermisch optische Effekte sind vorzugsweise bei optischen Hochleistungsoszillatoren äußerst störend, da sie die Strahlqualität des zu erzeugenden Hochleistungslaserstrahls verschlechtern (Strahlverformung, Spannungsdoppelbrechung, Strahlabweichungen usw.). Die thermische Linsenwirkung und die optischen Aberrationen werden durch anisotrope Temperaturverteilungen im optischen Medium hervorgerufen.

Ein Beispiel zur Elimination thermisch optischer Effekte in insbesondere kontinuierlich arbeitenden Hochleistungs-CO₂-Laserresonatoren wird in der Veröffentlichung A.V. Kudryashov, "Intracavity Laser Beam Control", SPIE Conf. on Laser Resonator II, San Jose, Calif., Seite 32 - 40; 1999 angegeben. Die Kompensation wird hier aktiv mittels einer sogenannten adaptiven Optik vorgenommen. Die adaptive Optik ist ein in seiner Oberflächenkontur verstellbarer Spiegel im gefalteten Strahlengang innerhalb des Resonators. Die Verstellung wird mit elektrisch ansteuerbaren piezoelektrischen Keramiken vorgenommen. Für die Regelung der Ansteuerung wird ein geringer Teil der Ausgangsstrahlung ausgekoppelt, durch eine Blende geführt und auf einen Thermosensor gegeben. Je nach empfangener Strahlungsleistung werden dann die einzelnen "Spiegelelemente" über eine Regelschaltung derart angesteuert, dass sich eine Spiegelverformung ergibt, welche Oberflächenverformungen der anderen optischen Komponenten kompensiert. Eine analoge adaptive Verstellung einer Spiegeloberfläche in einem gefalteten Strahlengang im Resonator ist in L. Flath, J. An, J. Brase, C. Varrano, C.B. Dane, S. Fochs, R. Hurd, M. Kartz, R. Sawvel; "Development of Adaptive Resonator Techniques for High-Power Lasers", Veröffentlichung zur Konferenz "Workshop an Adaptive Optics for Industry and Medicine", Durham (GB); Seite 163-168; 12.-16. Juli 1999 beschrieben.

Die Verformung eines Laserresonatorsspiegels zur Kompensation ist in N. Kugler, A. Vazquez, H. Laabs, H. Weber; "High-Power Solid-State Laser with Birefringence Compensation and Adaptive Resonator Mirror"; Veröffentlichung zur Konferenz "Workshop an Adaptive Optics for Industry and Medicine", Durham (GB); Seite 149-154; 12-16 Juli 1999 beschrieben.

Anstatt die Oberflächenkrümmungen von optischen Komponenten, insbesondere von Spiegeln aktiv gesteuert zu verändern, können im Laserresonator zur Kompensation thermischer Effekte am aktiven Element auch Linsen in der Resonatorachse verschoben werden. Derartige Anordnungen sind in St. Jackel, I. Moshe, R. Lavi; "High Performance Oscillators Employing Adaptive Optics Comprised of Discrete Elements"; SPIE Conf. on Laser Resonator II, San Jose, Calif., Seite 42 - 49; 12-16. Juli 1999; beschrieben.

Eine Kombination von mehreren, in ihrer optischen Wirkung steuerbaren Elementen in einem Laserresonator sind ebenfalls möglich. So werden in I. Moshe, S. Jackel; "Enhanced Correction of Thermo-Optical Aberations in Laser Oscillators", SPIE Conf. on Laser Resonator II, San Jose, Calif., Seite 181-186; 12.-16. Juli 1999 eine in ihrem Abstand zum Laserresonatorspiegel geregelt verstellbare Linse mit je einem Faraday-Rotator vor und hinter dem aktiven Medium eingesetzt.

Aus der DE-A 197 14 175 ist eine im gesamten Bereich einer Pumpleistung wirkende Kompensation der thermischen Linse im Laser-Medium bekannt. Die Kompensation der thermischen Linse wurde dadurch erreicht, dass ein Teil des Pumplichts selbst bei einem longitudinal gepumpten aktiven Medium mit seiner variierenden Leistung genutzt wurde, um ein entsprechendes die thermische Linse im aktiven Medium kompensierendes optische Element zu schaffen. Dieses Element war entweder ein modifizierter Einkoppelspiegel oder ein als Linse mit negativer (im Falle einer negativen thermischen Linse im Laser-Medium positiver) Brennweite wirkendes zusätzlich eingeführtes Element. Als Element könnte auch ein geeignetes gasförmiges oder flüssiges Medium, welches sich in einer geeigneten Küvette befand, verwendet werden. Neben der Pumplichtstrahlung könnte auch ein Teil der erzeugten Laserleistung zur Kompensation durch ein entsprechendes Element des Resonators geschickt werden.

Weitere Beispiele sind in der US-A 5 386 427, der US-A 5 751 750, der US-A 3 662 281, der US-A 3 609 584, der US-A 3 577 098 und der US-A 4 848 881 beschrieben.

### Aufgabe der Erfindung

Aufgabe der Erfindung ist es, gegenüber dem bekannten Stand der Technik eine bedeutend wirkungsvollere Kompensation der oben beschriebenen, durch radiale Temperaturgradienten in optischen Komponenten hervorgerufene optische Änderungen zu erreichen.

### Lösung der Aufgabe

Die obengenannte Aufgabe wird dadurch gelöst, indem im Gegensatz zum Stand der Technik die unterschiedlichen Funktionen der Absorption (Erwärmung), der radialen Wärmeleitung (zur Erzeugung einer leistungsabhängigen Temperaturverteilung) und die thermische Dispersion (zur Erzeugung einer thermischen Linse) auf verschiedene, d. h. mehrere Elemente mit unterschiedlichen Materialeigenschaften verteilt wird. Gegenüber dem Stand der Technik müssen nun nicht alle Funktionen von ein- und demselben Element erfüllt werden.

In Gegensatz zum Stand der Technik wird hier auf einen direkten Wärmeübergang durch innige Berührung zwischen einer optischen Komponente und dem Kompensationsmedium abgestellt. In bevorzugter Weise ist man bestrebt, in der optischen Komponente und im Kompensationsmedium eine annähernd gleiche radiale Wärmeverteilung zu erreichen.

Als Kompensationsmedium werden Materialien verwendet, welche keine oder nur vernachlässigbar geringe mechanischen Scherkräfte übertragen können. Derartige Materialien sind Flüssigkeiten, Gele und Gase.

Die Vorteile der Erfindung und deren Anwendungsgebiete ergeben sich aus der nachfolgenden Beschreibung.

### Kurze Beschreibung der Zeichnungen

Anschließend werden Beispiele des erfindungsgemäßen Verfahrens sowie des erfindungsgemäßen Gegenstands an Hand der Figuren erläutert. Es zeigen:
- Fig. 1: eine schematische Darstellung eines Laserresonators als optische Anordnung mit einer kompensierenden optischen Einheit und
- Fig. 2: eine Variante zur Darstellung in **Figur 1**, wobei hier ein aktives Lasermedium in Teilelemente aufgespalten ist und gleich zwischen diesen Elementen die optische Kompensation vorgenommen wird.

### Wege zur Ausführung der Erfindung

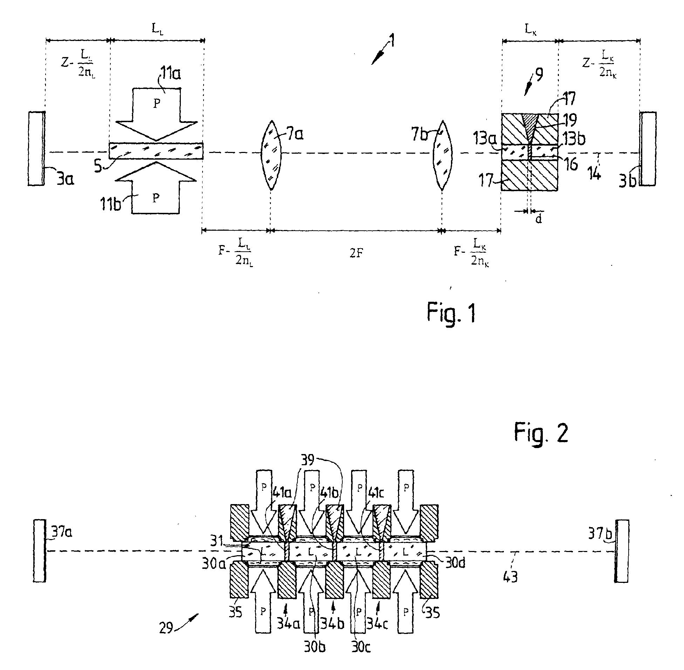

Der in **Figur 1** dargestellte beispielsweise Laserresonator **1** ist als symmetrischer Resonator mit zwei parallelen Spiegeln **3a** und **3b** aufgebaut. Im Laserresonator **1** ist ein Laserstab **5** als aktives Medium, zwei Linsen **7a** und **7b** und die erfindungsgemäße optische Einheit **9** angeordnet. Der Laserstab **5** wird, wie durch die Pfeile **11a** und **11b** schematisch angedeutet, transversal optisch gepumpt. Durch dieses Pumpen wird der Laserstab **5** in seinem Inneren erwärmt. An seinem Äusseren wird er gekühlt. Es bildet sich somit ein Temperaturgradient im Laserstab **5** aus; eine sogenannte thermische Linse hat sich gebildet. Die Brechkraft dieser thermischen Linse ändert sich mit der eingestrahlten Pumpenergie und der erzeugten Laserstrahlung, was wiederum zu Veränderungen in der Schwingungsform des Laserresonators führt und sich dann wieder auf die erzeugte Strahlungsleistung und deren Moden auswirkt. Ein derartiges Verhalten ist äusserst unerwünscht.

In dem in **Figur 1** skizzierten Laserresonator **1** werden die beiden Linsen **7a** und **7b** zur optimalen Überlagerung der thermischen Linse im Laserstab **5** mit jener in der Einheit **9** eingesetzt.

Die zur thermischen Kompensation verwendete Einheit **9** besteht hier aus zwei seitlich gekühlten, optisch transparenten zylindrischen Stäben **13a** und **13b** und einem schmalen Kompensationsraum **15** mit einem Kompensationsmedium **16**. Der Kompensationsraum **15** erstreckt sich senkrecht zur optischen Achse **14** des mit dem Laserstab **5** erzeugten Strahlenganges. Als Kompensationsmedium kann eine Flüssigkeit oder ein Gel verwendet werden. Als Kompensationsmaterialien können Wasser, deuteriertes Wasser oder optische Flüssigkeiten und Gele, wie beispielsweise vorzugsweise für den sichtbaren Spektralbereich OCF-446, OCF-452, OCF-463, OC-431 A-LVP, OC-440, OC-459, OC-462, OCK-433, Ock-451 verwendet werden. Diese Produkte werden beispielsweise von der Firma Nye Optical Products hergestellt. Für den an den sichtbaren Bereich anschließenden längerwelligen Spektralbereich wird man vorzugsweise volldeuterierte, chlorierte und fluorierte Gele oder Flüssigkeiten verwenden. Andere Flüssigkeiten und Gele können selbstverständlich verwendet werden. Es können auch Gase mit geeigneten optischen und thermischen Eigenschaften (Brechungsindex, thermische Dispersion) verwendet werden. Die Vorteile von Flüssigkeiten und Gelen sind eine sehr ausgeprägte negative thermische Dispersion (dn/dT) und das Ausbleiben von thermisch induzierter Doppelbrechung, da keine durch thermische Ausdehnung verursachte Druckgradienten entstehen können. Diese Kompensationsmedien übertragen keine mechanischen Scherkräfte. Für den Volumenausgleich bei einer thermischen Beaufschlagung des Kompensationsmediums ist ein Ausdehnungsraum **19** vorgesehen.

Die Stäbe **13a** und **13b** sowie auch das Kompensationsmedium **16** werden aussen durch eine Halterung **17** gekühlt. Als Stabmaterial kommt Glas oder noch besser ein doppelbrechender Kristall zur Vermeidung von thermisch induzierter Depolarisation in Frage. Ein doppelbrechender Kristall als Stab **13a** bzw. **13b** ist insbesondere dann von Vorteil, wenn der Laserstab **5** ebenfalls doppelbrechend ist. Die kristalloptischen Achsen sind aufeinander auszurichten.

Das Erwärmen des Mediums **16** geschieht nun zu einem kleinen Teil durch Absorption eines geringen Teils der transmittierenden Laserstrahlung (Restabsorption) und zum anderen grösseren Teil durch Wärmeleitung aus den benachbarten Stäben **13a** und **13b** in das Medium **16** hinein. Die Stäbe ihrerseits werden durch eine Absorption eines kleinen Teils der sie durchstrahlenden Laserstrahlung erwärmt. Man könnte auch zusätzlich Wärme transversal von einer Heizquelle einstrahlen. Damit auch im Kompensationsmedium **16** eine zur Kompensation geeignete leistungabhängige Linse entsteht, muss sich darin eine leistungsabhängige Temperaturverteilung einstellen. Dies bedingt, dass die Wärmeleitung vorwiegend transversal aus dem Material heraus stattfinden muss (quer zur Achse **14** der Strahlausbreitung). Besonders bei in Strahlausbreitungsrichtung schmalen Kompensationsmedien würde eine vorwiegende Kühlung über die Stirnflächen dazu führen, dass eine sich einstellende Temperaturverteilung vor allem durch die Intensitätsverteilung des transmittierten Strahls und nur in geringem Maß durch dessen Leistung beeinflusst wird. Dieser Vorgang wird in der Einheit **9** vermieden, indem das kompensierende Medium zwischen durch eine geringe Absorption des transmittierten Laserstrahls erwärmten und radial gekühlten Stäben **13a** und **13b** angeordnet ist. Die gewünschte leistungsabhängige Temperaturverteilung wird nun durch die Heiz-, Kühl- und Wärmeleitprozesse in den Stäben **13a** und **13b** erzeugt und durch einen Wärmekontakt auf das Kompensationsmedium **16** übertragen. Anstatt nur die Stäbe **13a** und **13b** zu heizen, kann die Erwärmung durch eine geringe Strahlungsabsorption im Kompensationsmedium **16** erfolgen. Unabhängig davon, ob die Erwärmung vorwiegend durch Absorption im Kompensationsmedium **16** oder in den Stäben **13a** und **13b** erzeugt wird, stellt sich dank dem Wärmekontakt vom Kompensationsmedium **16** zu den benachbarten Stäben **13a** und **13b** und der radialen Kühlung der Stäbe **13a** und **13b** die gewünschte leistungsabhängige Linse ein. Im Gegensatz zum Stand der Technik werden hier die unterschiedlichen Funktionen der Absorption (Erwärmung), der radialen Wärmeleitung (zur Erzeugung einer leistungsabhängigen Temperaturverteilung) und der thermischen Dispersion (zur Erzeugung der thermischen Linse) auf verschiedene Elemente mit unterschiedlichen Materialeigenschaften verteilt und müssen nicht alle von ein und demselben Element erfüllt sein.

Durch Mischen verschiedener Materialien (z. B. Wasser und schweres Wasser) und durch Auswahl einer geeigneten Dicke **d** des Kompensationsraumes **15** kann die Stärke der entstehenden Linse und allenfalls die Absorption optimiert werden. Durch ein Kühlen des Umfangs der Stäbe **13a** und **13b** mit einer sie umschließenden Halterung **17**, welche ebenfalls das Kompensationsmedium **16** aussen kühlt, entsteht eine leistungsabhängige, radial abnehmende Temperaturverteilung, welche wegen der thermischen Dispersion des Kompensationsmediums **16** zu einer leistungsabhängigen Linse führt. Aufgrund der geringen Dickenabmessung des Kompensationsraums **15** ist Wärmeverteilung im Kompensationsmedium **16** annähernd gleich zu derjenigen in den benachbarten Stäben **13a** und **13b.**

Vorzugsweise haben das Kompensationsmedium **16** und die Stäbe **13a** und **13b** denselben Brechungsindex. Hiermit wird erreicht, dass an den Grenzflächen zwischen Stabstirnfläche und Kompensationsmedium **16** keine Fresnel-Reflexionen auftreten und eine Verformung aufgrund der thermischen Ausdehnung der Stäbe **13a** und **13b** zu keiner Linsenwirkung führt. Die Fresnel-Reflexionen könnte man zwar durch eine Antireflexbeschichtung unterdrücken, was jedoch eine Verteuerung der Einheit **9** nach sich ziehen würde. Die oben angeführten Flüssigkeiten und Gele sind besonders geeignet, da ihr Brechungsindex eingestellt werden kann.

Der Kompensationsraum **15** kann zwei plan-parallele Grenzflächen (Stirnflächen der Stäbe **13a** und **13b**) haben. Es kann aber auch eine spezielle Formung vorgenommen werden, damit auch die im Laserstab **5** auftretenden höheren Aberrationen der thermischen Linse adaptiv kompensiert werden.

Bei einer ausreichend hohen thermischen Dispersion des Kompensationsmediums **16** kann die Dicke **d** des Kompensationsraums **15** so klein gewählt werden, dass keine Konvektion entsteht. Eine Konvektion würde nämlich zu Schlieren führen. Die Konvektion kann durch eine geeignete Wahl der Viskosität vermieden werden, was bei den oben erwähnten Materialien durch geeignete Zusätze möglich ist.

In **Figur 1** sind Angaben zur Anordnung der einzelnen Komponenten eingetragen. Der Laserstab **5** ist hier ein Nd:YAG mit einem Brechungsindex von n_{L} = 1,82, einer Länge L_{L} = 50 mm und einem Durchmesser von 4 mm. Die eine Stirnfläche des Laserstabes **5** hat von dem einen Resonatorspiegel **3a** einen achsialen Abstand von Z - L_{L}/2n_{L}. **Z** ist die Distanz zwischen einem Resonatorspiegel **3a** bzw. **3b** und der Hauptebene der thermischen Linse. Die Größe von **Z** beeinflusst die Modengrösse und den Stabilitätsbereich des Laserresonators **1**. Z = 80 mm. Die Brennweite **F** jeder Linse **7a** und **7b** ist 100 mm. Die optische Einheit **9** hat eine axiale Länge L_{K} von 20 mm. Die Stäbe **13a** und **13b** sind aus Glas mit einem Brechungsindex von n_{K} = 1,5 und einem Durchmesser von 4 mm. Die Dikke **d** des Kompensationsraumes **15** ist kleiner als 2 mm. Als Kompensationsmedium **15** ist hier OCF-446 verwendet worden.

Wählt man die Dicke **d** grösser, muss auch die Viskosität des Kompensationsmediums erhöht werden, damit keine Konvektion mit Schlierenbildung erfolgt.

Eine längere Strecke **Z** ergibt einen grösseren Modendurchmesser der erzeugten Laserstrahlung und damit eine bessere Strahlqualität, was durch eine zusätzlich im Resonator plazierte Linse erreicht werden kann. Die Distanzen **Z** zwischen Resonatorspiegel **3a** bzw. **3b** und der Hauptebene der thermischen Linse muss links und rechts im Resonator **1** nicht gleich gewählt werden. Auch müssen die beiden Resonatorspiegel **3a** und **3b** nicht plan ausgebildet sein; sie können auch gewölbt sein. Es handelt sich hier lediglich um eine von vielen Ausführungsvarianten, wobei alle optischen Komponenten variierbar sind.

Die Stäbe **13a** und **13b** können selbstverständlich auch einen quadratischen, quaderförmigen, regel- oder unregelmäßig vieleckig ausgebildeten Querschnitt haben. Auch kann sich die Querschnittskontur über der Stablänge verändern. Die Stablänge kann größer als die Stabquerdimension, aber auch bedeutend kleiner als diese sein (z. B. dünne Scheibe).

Anstelle eines Festkörperstabes **5** als aktives Medium kann auch ein anderes Verstärkermedium (Entladungsröhre [Gaslaser], Flüssigkeit [Farbstofflaser], ...) eingesetzt werden. Auch ist die Kompensation optisch thermischer Effekte nicht auf Laserresonatoren beschränkt; sie kann auch bei auf nichtlinearen optischen Prozessen beruhenden Mechanismen (Frequenzverdoppelung, parametrische Verstärkung und Oszillation, ...) verwendet werden

In **Figur 2** ist eine weitere Ausführungsvariante eines Laserresonators **29** dargestellt, wobei hier ein Laserstab in mehrere kleine Teilstäbe **30a** bis **30d** unterteilt worden ist, zwischen denen dann eine Kompensation vorgenommen wird. In Analogie zu **Figur 1** besteht nun eine optische Einheit **34a** bis **34c** zur Kompensation jeweils aus den beiden benachbarten optisch transparenten Festkörpern, d. h. den Teilstäben **30a** und **30b, 30b** und **30c** sowie **30c** und **30d**. Zwischen den Stirnseiten der benachbarten Teilstäbe ist dann das Kompensationsmedium **39** angeordnet. Die Teilstäbe **30a** bis **30d** sind aussen mit einer Kühlung **31** versehen, welche gleichzeitig das Kompensationsmedium **39** in den Kompensationseinheiten **34a** bis **34c** mit dessen Halterungen **35** kühlt. Die Resonatorspiegel sind hier mit **37a** und **37b** gekennzeichnet.

Durch die Erwärmung in den Laserstäben und das seitliche Kühlen, stellt sich in den Teilstäben **30a** bis **30d** eine leistungsabhängige Temperaturverteilung und damit eine leistungsabhängige positive thermische Linse ein. Diese Temperaturverteilung in den Teilstäben **30a** bis **30d** überträgt sich durch den Wärmekontakt zwischen den Stirnflächen der Teilstäbe **30a** bis **30d** auf das Kompensationsmedium, hier mit **39** gekennzeichnet. Hierdurch ensteht in den Kompensationsräumen **41a** bis **41c** durch das dort befindliche Kompensationsmedium **39** eine negative thermische Linse, welche die positive thermische Linse der Teilstäbe **30a** bis **30c** kompensiert. Im Kompensationsmedium ist hier weder eine Absorption der Laserstrahlung noch der Pumpstrahlung notwendig.

Für die Laserstäbe wird vorzugsweise intrinsisch doppelbrechendes Material, wie z. B. Nd:YVO₄ verwendet. Es tritt dann weder in den Teilstäben **30a** bis **30c** noch im Kompensationsmedium störende thermisch induzierte Doppelbrechung auf. Die optische Achse der Teilstäbe **30a** bis **30c** wird senkrecht zur Resonatorachse **43** ausgerichtet. Um eine, allfällige aufgrund der Anisotropie des Materials der Teilstäbe **30a** bis **30c** verursachte Asymmetrie der thermischen Linse auszumitteln, werden die Teilstäbe so angeordnet, dass in benachbarten Teilstäben die optischen Achsen jeweils um 90° zueinander verdreht sind. Zusätzlich könnte man dann zwischen den einzelnen Teilstäben **30a** bis **30c** die Polarisation der transmittierten Laserstrahlung durch geeignete optische Elemente ebenfalls um 90° drehen. Auf diese Weise kann die Verstärkung der Laserstrahlung optimiert werden (Anisotropie der Kristalle). Als Alternative könnten zusätzlich auch die Stirnflächen der Teilstäbe gewölbt ausgebildet werden.

Vorzugsweise wird man hier die Dicke der Kompensationsräume **41a** bis **41c** deutlich unter 1 mm ausbilden. Die Länge der Teilstäbe kann einige Millimeter bis einige Zentimeter bei einem typischen Stabdurchmesser von 4 mm sein. **Z** wird man typischerweise zwischen 20 mm und 100 mm wählen.

Was oben bezüglich der Wärmeübertragung und der Geometrie für die Stäbe **13a** bzw. **13b** ausgeführt worden ist, gilt sinngemäß auch für die Teilstäbe **30a** bis **30d**.

In den **Figuren 1** und **2** ist ein transversales Pumpen des Laserstabs **5** bzw. **30a** bis **30d** dargestellt. Selbstverständlich können auch ein longitudinales Pumpen oder andere Anregungsmechanismen (Gasentladung, HF-Anregung, gasdynamische, elektronische, elektrische Anregung, Elektronenkanone, ...) des Lasermediums verwendet werden.

## Patentansprüche

1. Verfahren zur Kompensation thermisch optischer Effekte im Strahlengang einer optische Komponenten enthaltenden Anordnung, **dadurch gekennzeichnet, dass** zur optischen Kompensation im Strahlengang wenigstens zwei unterschiedliche Materialeigenschaften aufweisende optische Elemente **(13a, 13b, 16; 30a-30d, 41a-41c)** im Zusammenspiel verwendet werden und zur Kompensation eine Erwärmung mittels Strahlungsabsorption, eine Wärmeleitung zur Erzeugung einer leistungsabhängigen Temperaturverteilung und/oder eine thermische Dispersion zur Erzeugung einer thermischen Linse auf die unterschiedlichen Elemente **(13a, 13b, 16; 30a-30d, 41a-41c)** verteilt wird.

2. Verfahren nach Anspruch 1, **dadurch gekennzeichnet, dass** eines der optischen Elemente **(13a, 13b, 16; 30a-30d, 41a-41c)** als ein keine mechanischen Scherkräfte übertragendes, optisch transparentes Kompensationsmedium **(16; 39)** im Strahlengang **(14; 43)** beidseits in Berührungskontakt mit einem ebenfalls optisch transparenten Festkörper **(13a, 13b; 30a-30d)** als weiteres Element gebracht wird und das weitere Element **(13a, 13b; 30a-30d)** eine vorgegebene Strahlungsrestabsorption hat, wobei dessen radiales Erwärmungsmuster durch den Berührungskontakt in das Kompensationsmedium **(16; 39)** zur Kompensation thermisch optischer Effekte in den anderen optischen Komponenten **(5, 7a, 7b; 30a-30d)** bzw. der angrenzenden Festkörper **(13a, 13b; 30a-30d)** eingeprägt wird.

3. Verfahren nach Anspruch 2, insbesondere zur Kompensation thermisch optischer Effekte in einem Laserresonator, **dadurch gekennzeichnet, dass** das weitere Element eine vorgegebene Restabsorption für die Laserstrahlung im Strahlengang, vorzugsweise für die Pumplichtstrahlung hat und in bevorzugter Weise das Kompensationsmedium **(16; 39)** und die angrenzenden Festkörper **(13a, 13b; 30a-30d)** an ihrem Umfang, insbesondere in gleichem radialen Abstand von der Achse **(14; 43)** des Strahlengangs, vorzugsweise umschliessend, auf gleiche Temperatur gekühlt werden.

4. In den Strahlengang **(14; 43)** einer optischen Anordnung **(1; 29)** einbringbare optische Einheit **(9; 34a-34c)** für eine Kompensation thermisch optischer Effekte vom im Strahlengang der Anordnung vorhandener optischer Komponenten **(5, 7a, 7b; 30a-30d)** zur Durchführung des Verfahrens nach einem der Ansprüche 1 bis 3, **gekennzeichnet durch** wenigstens zwei unterschiedliche Materialeigenschaften aufweisende, für die Kompensation wirksam zusammen spielende optische Elemente **(13a, 13b, 16; 30a-30d, 41a-41c)** im Strahlengang, auf die zur Kompensation eine Erwärmung mittels Strahlungsabsorption, eine Wärmeleitung zur Erzeugung einer leistungsabhängigen Temperaturverteilung und/oder eine thermische Dispersion zur Erzeugung einer thermischen Linse in bevorzugt unterschiedlicher Einwirkung **(13a, 13b, 16; 30a-30d, 41a-41c)** verteilbar ist.

5. Optische Einheit nach Anspruch 4, **dadurch gekennzeichnet, dass** ein Element als ein optischer Kompensationsraum **(15; 41a-41c)** ausgebildet ist, der mit einem keine mechanischen Scherkräfte übertragenden, optisch transparenten Kompensationsmedium **(16; 39)** gefüllt, insbesondere vollständig gefüllt ist, und beidseits zum Kompensationsraum **(15; 41a-41c)** angeordnete, optisch transparente Festkörper **(13a, 13b; 30a-30d)** als weiteres Element mit einer Strahlungsrestabsorption, mit denen das Kompensationsmedium **(16; 39)** einen derart engen thermischen Kontakt aufweist, dass ein guter Wärmeübergang von den Festkörpern **(13a, 13b; 30a-30d)** zum Kompensationsmedium **(16; 39)** gewährleistet ist.

6. Optische Einheit **(9; 34a-34c)** nach Anspruch 5, **dadurch gekennzeichnet, dass** der Kompensationsraum **(15; 41a-41c)** sich senkrecht zur optischen Achse **(14; 43)** des Strahlenganges, insbesondere in einer zur Achse des Strahlengangs radialsymmetrischen Ausbildung, erstreckt.

7. Optische Einheit **(9; 34a-34c)** nach Anspruch 5 oder 6, **dadurch gekennzeichnet, dass** die zur optischen Achse **(14; 43)** des Strahlengangs radiale Ausdehnung des Kompensationsraums **(15; 41a-41c)** derjenigen der benachbarten Festkörper **(13a, 13b; 30a-30d)** angepasst ist, bevorzugt gleich gewählt ist.

8. Optische Einheit **(9; 34a-34c)** nach einem der Ansprüche 5 bis 7 **gekennzeichnet durch** einen Ausdehnungsraum **(19)**, der mit dem Kompensationsraum **(15; 41a-41c)** verbunden ist, in den das Kompensationsmedium **(16; 39)** bei einer thermischen Beaufschlagung einen Volumenausgleich vornehmen kann.

9. Optische Einheit **(9; 34a-34c)** nach einem der Ansprüche 5 bis 8, **dadurch gekennzeichnet, dass** die dem Kompensationsmedium **(16; 39)** unmittelbar benachbarten Festkörper **(13a, 13b; 30a-30d)** mit einer kühlenden Halterung **(17; 35)** gehalten sind, welche vorzugsweise den gesamten Mantel des Festkörpers **(13a, 13b; 30a-30d)** im innigen Wärmekontakt vollständig umschliesst.

10. Optische Anordnung **(29)** mit einer optischen Einheit **(9; 34a-34c)** nach einem der Ansprüche 3 bis 9 zur Erzeugung oder Verstärkung einer Strahlung mit wenigstens einem optisch aktiven Medium **(30a-30d), dadurch gekennzeichnet, dass** das aktive Medium in Teilmedien **(30a-30d)** unterteilt ist, zwischen den Teilmedien **(30a-30d)** als ein optisches Element ein mit einem Kompensationsmedium **(39)** gefüllter Kompensationsraum **(41a-41c)** als weiteres optisches Element der optischen Einheit **(34a-34c)** angeordnet ist und jedes Teilmedium **(30a-30d)** als optisch transparenter Festkörper der Einheit **(34a-34c)** wirkt.
